# EUROPÄISCHE PATENTANMELDUNG

(11) **EP 2 308 628 A1**
(43) Veröffentlichungstag der Anmeldung: **13.04.2011**
(21) Anmeldenummer: 09012637.6
(22) Anmeldetag: 06.10.2009
(51) Int. Cl.: B23K 1/00, B23K 1/018, B23P 6/00, B23P 19/04, F01D 5/00

(54) **Verfahren zum Entfernen einer angelöteten Komponente mit lokaler Erwärmung der Lotstelle**

(71) Anmelder: Siemens Aktiengesellschaft, 80333 München (DE)
(72) Erfinder: Dumm, Andreas, 10367 Berlin (DE); Möllenbeck, Peter, 12161 Berlin Tempelhof-Schöneberg (DE); Reinkensmeier, Ingo, 58730 Fröndenberg (DE)

(57) **Zusammenfassung**

Durch eine lokale Erwärmung einer Lotstelle (10), die ein Blech (4) im Inneren eines Hohlraums mit einem Bauteil (1, 120, 130) verbindet, wird die Entfernung des Blechs (4) aus dem Hohlraum (13) sehr stark vereinfacht gegenüber dem bisherigen mechanischen Entfernen.

## Beschreibung

Die Erfindung betrifft das Entfernen von gelöteten Blechen von einem Bauteil.

Löten ist eine Verbindungstechnik um Komponenten an Bauteile anzubinden.
Dies ist bei Blechen für Turbinenschaufeln der Fall, die im Fuß als auch im Kopf (soweit vorhanden) angelötet werden.

Beim Wiederaufarbeiten, d.h. nach dem Einsatz der Turbinenschaufeln, müssen diese Bleche entfernt werden. Dies geschieht zeitaufwändig durch eine mechanische Entfernung des Blechs auf einer Bearbeitungsmaschine.

Es ist daher Aufgabe der Erfindung oben genanntes Problem zu lösen.

Die Aufgabe wird gelöst durch ein Verfahren gemäß Anspruch 1.

In den Unteransprüchen sind weitere vorteilhafte Maßnahmen aufgelistet, die miteinander kombiniert werden können, um weitere Vorteile zu erzielen.

Bei dem Verfahren wird die Lötstelle lokal erwärmt.

Es zeigen
- Figur 1, 2, 3: ein Bauteil mit einer Lotstelle,
- Figur 4: eine Anordnung, um das gelötete Bauteil zu entfernen,
- Figur 5: eine Turbinenschaufel.

Die Figuren und die Beschreibung stellen nur Ausführungsbeispiele der Erfindung dar.

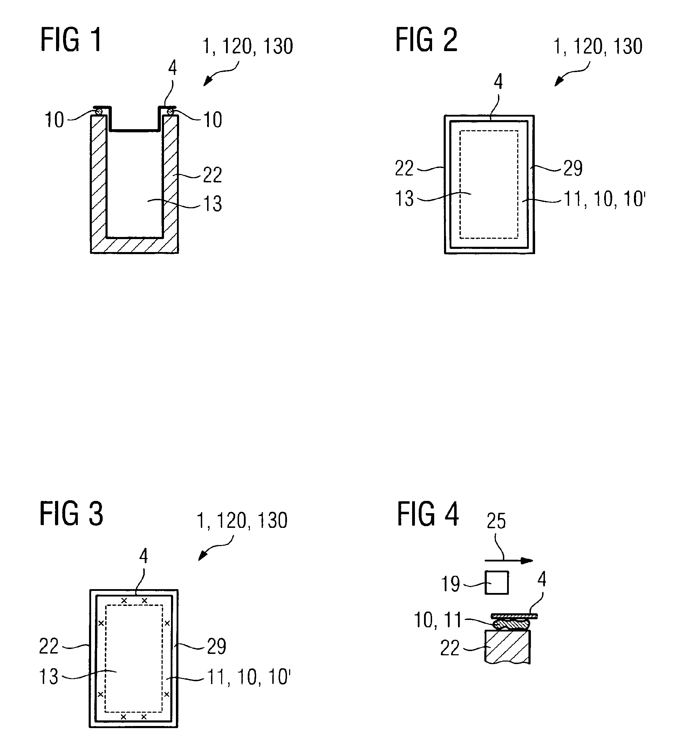

In der Figur 1 ist ein Bauteil 1, insbesondere eine Turbinenschaufel 120, 130 gezeigt, die einen Hohlraum 13 aufweist, der 13 durch Wände 22 begrenzt wird.

Über dem Hohlraum 13 ist eine Komponente 4, insbesondere ein Blech 4, an die Wand 22 oder auf die Stirnflächen 29 der Wand 22 eines Bauteils 1, 120, 130 angelötet.
Die Lötung ist vorzugsweise eine durchgehende Lotnaht 11, so dass das Blech 4 im Bereich der Lotnaht 11 gegenüber dem Hohlraum 13 luftdicht abgeschlossen ist.
Eine Lotnaht 11 ist nicht punktförmig und ist vorzugsweise mindestens fünfmal so lang wie breit.
Eine Lotnaht 11 ist nicht punktförmig und ist vorzugsweise mindestens fünfmal so lang wie breit.

Figur 2 zeigt eine Aufsicht auf die Figur 1, bei dem gestrichelt angedeutet der Konturverlauf des Hohlraums 13 dargestellt ist, der beliebig verlaufen kann.
Dies ist vorzugsweise die Aufsicht auf eine Unterseite 29 einer Plattform 403 einer Leitschaufel 130.
Figur 2 zeigt, dass das Blech 4 auf der oberen Stirnfläche 29 der Wand 22 aufliegt.
Zwischen dem gestrichelten Verlauf und dem äußeren Verlauf des Blechs 4 ist ein Lot 10, 10', vorzugsweise vollständig umlaufend als Lotnaht 11, vorhanden.

Ebenso kann es möglich sein, dass das Blech 4 vor dem Anlöten an einigen Stellen (siehe X in Figur 3) fixiert, insbesondere geschweißt ist, damit beim Löten das Blech 4 stabilisiert ist.
Das Anlöten des Bleches 4 erfolgt vorzugsweise dadurch, dass das Blech 4 zuerst an den Stellen X punktgeschweißt wird, dann vorzugsweise eine Lötpaste um die äußere Kante des Blechs 4 aufgebracht und dann im Ofen erwärmt wird und das Lot durch Kapillarwirkung in den Spalt zwischen Blech 4 und Bauteil 1, 120, 130 hineingezogen wird.

In Figur 4 ist schematisch dargestellt, wie lokal, d.h. mittels einer Heizquelle die Lotstelle 10 erwärmt wird.
Lokal bedeutet, dass nicht das gesamte Bauteil 1, 120, 130 erwärmt wird, so dass das Bauteil 120, 130 lediglich lokal an der Lotstelle 10, 10' oder lokal an der Lötnaht 11 erwärmt wird.
Als Heizquelle 19 kann vorzugsweise ein Plasma, eine Induktionsquelle oder ein Laser verwendet werden.
Das Lot ist von oben nicht direkt zugänglich.

Das Loslösen des Blechs 4 kann durch manuelle Krafteinwirkung oder durch Absaugen des weichen Lots unterstützt werden, insbesondere wenn Schweißstellen (x) vorhanden sind.

Nach und nach wird das Lot 10, 11 erwärmt, die Verbindung zwischen Komponente 4 und Bauteil 1, 120, 130 immer mehr gelöst bis sie vollständig aufgehoben ist.

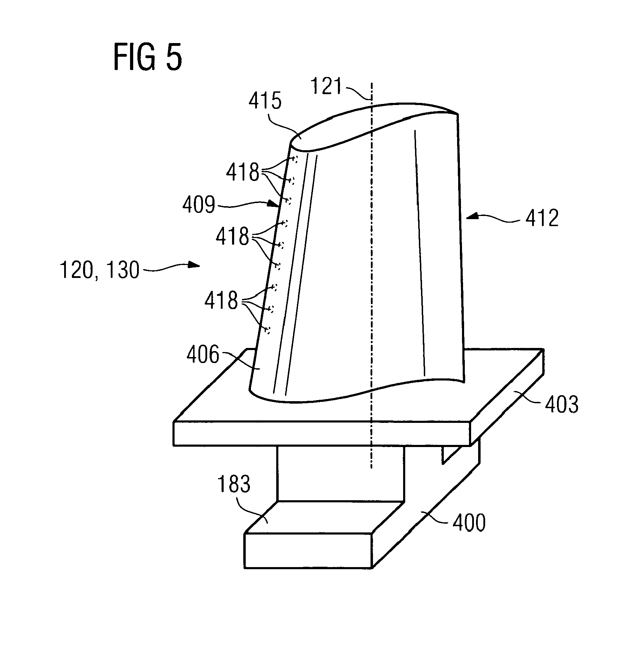

Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrA1X-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12A1-0,6Y-3Re oder Ni-12Co-21Cr-11A1-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zum Entfernen einer angelöteten Komponente (4) von einem Bauteil (1, 120, 130),
insbesondere einer Turbinenschaufel (120, 130),
bei dem die zumindest eine Lotstelle (10, 10') oder Lotnaht (11) zwischen der Komponente (4) und dem Bauteil (1, 120, 130) lokal erwärmt wird.

2. Verfahren nach Anspruch 1,
bei dem an der Komponente (4) während der Erwärmung des Lots (10, 10', 11) eine Kraft anliegt.

3. Verfahren nach Anspruch 1 oder 2,
bei dem eine Plasmaquelle zur Erwärmung des Lots (10, 10', 11) verwendet wird.

4. Verfahren nach Anspruch 1 oder 2,
bei dem eine Induktionsquelle zur Erwärmung des Lots (10, 10', 11) verwendet wird.

5. Verfahren nach Anspruch 1, 2, 3 oder 4,
bei dem die Komponente (4) ein Blech ist.

6. Verfahren nach Anspruch 1, 2, 3, 4 oder 5,
bei dem die Komponente (4) an das Bauteil (1, 120, 130) an mehreren Stellen fixiert, insbesondere angeschweißt ist.

7. Verfahren nach Anspruch 1, 2, 3, 4, 5 oder 6,
bei dem zumindest eine Lotnaht (11) vorhanden ist, insbesondere nur eine Lotnaht (11) vorhanden ist.

8. Verfahren nach Anspruch 1, 2, 3, 4, 5 oder 6,
bei dem nur Lotstellen (10) vorhanden sind.

9. Verfahren nach Anspruch 1, 2, 3, 4, 5, 6, 7 oder 8, bei dem die Lotstelle (10, 10') oder die Lotnaht (11) aufeinanderfolgend lokal erwärmt wird,
so dass die Verbindung zwischen der Komponente (4) und dem Bauteil (1, 120, 130) immer mehr gelöst wird.

10. Verfahren nach einem oder mehreren der vorherigen Ansprüche,
bei dem das Bauteil (1, 120, 130) ein massives Bauteil darstellt,
insbesondere massives Hohlbauteil darstellt.
